# FASCICULE DE BREVET EUROPEEN

(11) **EP 2 456 609 B1**
(45) Date de publication et mention de la délivrance du brevet: **19.03.2014**
(21) Numéro de dépôt: 10732390.9
(22) Date de dépôt: 15.07.2010
(51) Int. Cl.: B29C 49/68, B29C 49/42, B65G 17/42, B29C 49/06

(54) **DISPOSITIF POUR LE CONVOYAGE DE PRÉFORMES DANS UNE UNITÉ DE CHAUFFAGE**
VORRICHTUNG ZUR FÖRDERUNG VON VORFORMEN IN EINEM HEIZGERÄT
DEVICE FOR CONVEYING PREFORMS IN A HEATING UNIT

(30) Priorité: 21.07.2009 FR 0955051
(43) Date de publication de la demande: 30.05.2012
(73) Titulaire: Sidel Participations, 76930 Octeville sur Mer (FR)
(72) Inventeur: GILLET, Denis, F-76930 Octeville Sur Mer (FR); ANDREUX, Patrice, F-76930 Octeville Sur Mer (FR); MUZZOLINI, Damien, F-76930 Octeville Sur Mer (FR)
(74) Mandataire: Gevers France
(86) Numéro de dépôt international: PCT/EP2010/060251
(87) Numéro de publication internationale: WO 2011/009805

(56) Documents cités:
- EP-A2- 0 248 376
- EP-A2- 0 266 804
- WO-A1-01/64424
- DE-A1- 19 727 355
- US-A1- 2009 133 993

## Description

L'invention concerne un dispositif pour le convoyage de préformes dans une unité de chauffage.

L'invention concerne plus particulièrement un dispositif de convoyage d'au moins une préforme dans une unité de chauffage de préformes, le dispositif de convoyage comportant :
- au moins une courroie de convoyage sans fin qui est entraînée en déplacement,
- au moins deux éléments tournants d'entraînement de la courroie de convoyage qui sont chacun montés tournant autour d'un axe et qui coopèrent avec la courroie de convoyage pour l'entraîner en déplacement selon un parcours en boucle fermée,
- au moins un dispositif de support d'au moins une préforme qui est lié en déplacement à la courroie de convoyage et qui est destiné à porter la préforme.

L'invention se rapporte au domaine de la fabrication de récipients ou corps creux en matériau thermoplastique, tels que des bouteilles, des flacons, etc.

Pour fabriquer un tel récipient, on réalise tout d'abord une préforme par injection, notamment en matériau thermoplastique tel que du PET (polyéthylène téréphtalate).

La préforme est ensuite destinée à être conditionnée thermiquement, c'est à dire chauffée dans une unité de chauffage comportant au moins un four, à la suite de quoi la préforme est apte à être transformée au moyen d'au moins un fluide sous pression, notamment par soufflage ou par étirage soufflage au moyen d'une machine de soufflage permettant d'obtenir le récipient final.

La préforme obtenue par injection présente généralement un corps cylindrique tubulaire qui est fermé à l'une de ses extrémités axiales et qui est prolongé à son autre extrémité par un col, lui aussi tubulaire.

Pour pouvoir procéder à cette opération de soufflage, il est nécessaire que le corps de la préforme soit porté à une température supérieure à la température de transition vitreuse du matériau thermoplastique.

A cet effet, on procède au chauffage de la préforme en la faisant circuler à l'intérieur d'un four suivant un parcours de chauffe et ceci au moyen d'un dispositif de convoyage sans fin.

Le four comporte des moyens de chauffage qui sont par exemple constitués par des lampes à infrarouge disposées sur tout ou partie du parcours de chauffe et devant lesquelles le corps de la préforme est déplacé par le dispositif de transport, généralement en étant mise en rotation sur elle-même.

Chaque préforme est généralement maintenue sur le dispositif de convoyage par un dispositif de support associé comportant des moyens de préhension.

Un tel dispositif de convoyage est connu du document EP 0 266 804 A2.

De façon connue, le dispositif de convoyage des préformes comporte une chaîne sans fin qui est entraînée en déplacement dans le four par des moyens motorisés, selon un parcours en boucle fermée.

La chaîne est constituée d'une succession de maillons liés entre eux deux à deux par un palier, de sorte que la chaîne constitue une succession de maillons articulés. La chaîne est d'une part apte à être entraînée suivant ledit parcours en boucle et, d'autre part, apte à transmettre ce mouvement aux dispositifs de support des préformes qui lui sont reliés et qu'elle supporte.

Chaque dispositif de support d'une préforme est lié en déplacement à la chaîne et monté solidaire d'au moins un maillon associé de la chaîne.

Les dispositifs de support des préformes sont juxtaposés le long de la chaîne en étant rapprochés le plus possible les uns des autres de manière que la chaîne, pour une longueur donnée, porte un maximum de préformes afin d'optimiser le rapport entre la longueur de la chaîne, incidemment du four, et le nombre de préformes chauffées, tout cela par soucis de rendement et d'efficacité.

Cependant, bien que la chaîne soit un moyen de convoyage satisfaisant, elle présente certains inconvénients.

En effet, le nombre maximum de dispositifs de support portés par la chaîne détermine un pas qui dépend des maillons de la chaîne, notamment de l'entraxe c'est à dire de la distance qui sépare les paliers de deux maillons consécutifs.

La valeur minimale du pas entre deux supports consécutifs est ainsi limitée par la nécessité de respecter une longueur minimale, par exemple 40 millimètres, pour garantir une résistance suffisante à la chaîne.

Or, on a constaté que la qualité du chauffage des préformes est améliorée lorsque le pas entre chacune d'elles est réduit.

De plus, les mouvements relatifs des maillons articulés de la chaîne sont une source d'usure de la chaîne, en particulier des paliers. Il est possible de limiter en partie cette usure en lubrifiant la chaîne.

Toutefois, la lubrification de la chaîne requiert d'une part des opérations fréquentes d'entretien et de maintenance ce qui est coûteux et, d'autre part, est une source de pollution des préformes à cause du risque de projection du lubrifiant à l'intérieur du four.

On connaît, par exemple du document WO-A1-01/64424, un dispositif de convoyage comportant une courroie sans fin qui est entraînée en rotation par des moyens d'entraînement et à laquelle sont liés en déplacement des moyens de support de préformes destinées à être chauffées dans un four.

Toutefois, dans ce document comme auparavant dans les autres dispositifs de l'état de la technique utilisant une chaîne à maillons, l'organe de convoyage formé par la courroie assure d'une part le transport des préformes suivant un parcours en boucle fermée et, d'autre part, porte les moyens de support des préformes.

Ces conceptions de dispositifs de convoyage ne donnent pas entière satisfaction dès lors que, tout d'abord, la courroie comme la chaîne doivent présenter une très grande résistance mécanique pour supporter d'une part les efforts de traction et, d'autre part, la charge de l'ensemble des moyens de support.

Ensuite, les opérations de montage et démontage de tels organes de convoyage sont particulièrement complexes et nécessitent de très long arrêts de l'unité de chauffage le temps d'être mises en oeuvre.

L'invention vise notamment à proposer un dispositif de convoyage permettant de remédier à ces inconvénients.

Dans ce but, l'invention propose un dispositif de convoyage du type décrit précédemment, caractérisé en ce que la courroie de convoyage comporte au moins :
- une bande principale de traction qui coopère avec lesdits éléments tournants, et
- une bande secondaire de support qui est liée en déplacement à la bande principale par des moyens de liaison, et sur laquelle au moins un dispositif de support est attaché par un moyen d'attache.

Avantageusement, les opérations de maintenance pour la lubrification de la chaîne comme les risques de pollution sont supprimés par l'utilisation d'une courroie.

Avantageusement, l'invention permet d'optimiser la conception de chacune des bandes de la courroie par rapport à sa fonction propre, à savoir respectivement l'entraînement pour la bande principale et le support pour la bande secondaire.

Grâce à l'invention, les opérations de changement des moyens de support montés solidairement sur la courroie secondaire par l'intermédiaire des moyens d'attache sont particulièrement aisées et rapides à réaliser, sans qu'il soit nécessaire de démonter la bande principale de traction, ni de démonter un à un chaque dispositif de support.

Avantageusement, la bande secondaire de support de la courroie est entraînée de manière parfaitement synchrone par la bande principale de traction grâce aux moyens de liaison les reliant l'une à l'autre en déplacement

Selon d'autres caractéristiques de l'invention :
- la bande principale et la bande secondaire de la courroie s'étendent chacune verticalement dans le sens de leur largeur, et la bande secondaire est agencée au dessus de la bande principale de sorte que la bande principale et la bande secondaire ont le même rayon de courbure autour desdits axes verticaux au cours de l'entraînement de la courroie ;
- la bande principale est réalisée en une seule pièce de façon à former une boucle fermée autour desdits axes verticaux ;
- chaque élément tournant, formant une roue dentée, délimite une série de dents qui coopèrent avec une série de dents verticales complémentaires de la bande principale de la courroie, afin d'entraîner la courroie en déplacement ;
- le moyen d'attache du dispositif de support de la préforme sur la courroie comporte au moins une barrette verticale qui est fixée sur le dispositif de support, de sorte que la bande secondaire est interposée et pincée entre le dispositif de support et ladite barrette, grâce à quoi le dispositif de support et la bande secondaire associée sont liés entre eux ;
- la barrette coopère avec au moins une dent de la bande secondaire de façon à bloquer en déplacement la barrette sur la courroie selon le sens d'avancement de la courroie ;
- la bande secondaire est réalisée en une pluralité de tronçons qui sont agencés bout à bout et dont chacun est lié en déplacement à la bande principale par lesdits moyens de liaison et une pluralité de dispositifs de support sont attachés sur chaque tronçon par lesdits moyens d'attache ;
- les moyens de liaison de la bande secondaire sur la bande principale comportent au moins une première bride et une seconde bride qui s'étendent verticalement en vis à vis et qui sont liées entre elles, la bande principale et la bande secondaire étant interposées et pincées entre les brides de façon à lier lesdites bandes entre elles, au moins la première bride coopère avec au moins une dent de la bande secondaire et une dent de la bande principale, de façon à bloquer en déplacement lesdites bandes entre elles selon le sens d'avancement de la courroie ;
- la courroie comporte une bande secondaire supplémentaire qui présente, selon un plan horizontal de symétrie passant par la bande principale, une symétrie de conception avec la bande secondaire.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue en perspective, qui illustre le dispositif de convoyage comportant une courroie selon l'invention, tendue entre deux roues ;
- la figure 2 est une vue de détail en perspective, qui illustre les moyens d'attache des dispositifs de support sur la courroie et les dispositifs de liaison des bandes supérieure et inférieure sur la bande principale de la courroie de la figure 1.

Dans la description et les revendications, on adoptera par convention et à titre non limitatif les termes "supérieur" et "inférieur", en référence à la direction verticale et les directions longitudinale, verticale et transversale en référence aux trièdres (L, V, T) indiqués sur les figures.

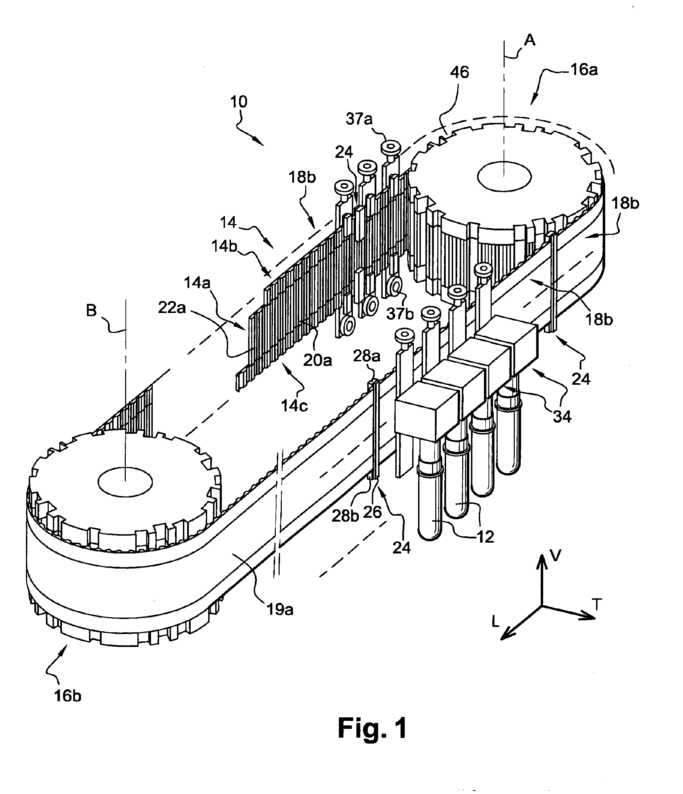

La figure 1 représente un dispositif de convoyage 10 de préformes 12, destiné à transporter les préformes 12 suivant un parcours de chauffe dans un four (non représenté) apte à chauffer les préformes 12.

Le dispositif de convoyage 10 comporte une courroie 14 qui est entraînée en déplacement dans le four suivant un parcours de chauffe en boucle, ici un parcours de forme ovale, dans un plan horizontal, autour d'un premier axe vertical A et d'un second axe vertical B.

A cet effet, la courroie 14 s'étend verticalement de haut en bas dans le sens de sa largeur et elle est tendue entre une première roue dentée 16a, avantageusement motrice, et une seconde roue dentée 16b qui sont respectivement montées tournantes autour du premier axe vertical A de rotation et du second axe vertical B de rotation.

La seconde roue dentée 16b est par exemple montée mobile selon un axe horizontal qui passe par le centre des deux roues 16a, 16b, afin de faciliter le montage, le démontage et le réglage de la tension de la courroie 14.

La courroie 14 présente une symétrie générale de conception selon un plan horizontal de symétrie (non représenté) correspondant à un plan (L, T) qui passe par le milieu de la courroie 14.

La première roue dentée 16a motrice est entraînée en rotation par un moyen motorisé (non représenté), par exemple par un moteur électrique.

La courroie 14 forme une boucle fermée qui comporte au moins une bande principale 14a.

De préférence, la courroie 14 comporte encore une première bande secondaire supérieure 14b de support et/ou une seconde bande secondaire inférieure 14c de support, ladite seconde bande inférieure 14c étant symétrique à la première bande supérieure 14b.

La bande principale 14a, dite de traction, remplit une fonction d'entraînement d'une série de dispositifs de support 34 des préformes 12, la bande principale 14a est apte à recevoir la puissance motrice de la première roue dentée 16a afin d'entraîner en déplacement les dispositifs de support 34 suivant le parcours de chauffe.

Afin de rendre les figures plus lisibles, seul un nombre limité de dispositifs de support 34 est représenté à la figure 1.

De préférence, la bande principale 14a est réalisée en une seule pièce et d'un seul tenant pour favoriser la résistance mécanique à la traction de la courroie 14.

La bande principale 14a est réalisée en matériau élastomère, par exemple par moulage, et elle est renforcée par une série de câbles horizontaux (non représentés) qui sont noyés dans la bande principale 14a et qui sont superposés verticalement de façon régulière, l'ensemble bande comme câbles étant circonférentiellement continu de sorte que la bande principale 14a est une boucle fermée.

Toutefois, à titre non limitatif, la bande principale 14a peut être réalisée sous la forme d'une bande rectiligne ouverte dont les deux extrémités libres sont susceptibles d'être reliées entre elles par un moyen de liaison pour former une boucle fermée.

La bande principale 14a comporte une face verticale externe 19a et une face verticale interne 20a d'entraînement qui est agencée en regard des deux roues 16a, 16b.

La face verticale interne 20a délimite une série de dents 22a d'entraînement qui s'étendent verticalement de haut en bas, de préférence sur toute la largeur de la bande principale 14a, et qui coopèrent avec les dents des deux roues dentées 16a, 16b complémentaires, pour entraîner la courroie 14 en déplacement.

La bande supérieure 14b est agencée au dessus de la bande principale 14a.

De préférence, la bande supérieure 14b est en appui vertical sur un chant supérieur 21 a horizontal de la bande principale 14a.

La bande inférieure 14c est agencée au dessous de la bande principale 14a, de préférence également en appui vertical sur un chant inférieur 21 b horizontal de la bande principale 14a.

En variante, la bande supérieure 14b et/ou inférieure 14c n'est pas en appui vertical sur le chant correspondant de la bande principale 14a de sorte qu'il existe un espace ou jeu entre lesdites bandes 14a, 14b et/ou 14c de la courroie 14.

La bande principale 14a, la bande supérieure 14b et la bande inférieure 14c sont courbées autour des deux axes verticaux A, B selon le même rayon de courbure, c'est à dire que la bande principale 14a, la bande supérieure 14b et la bande inférieure 14c sont coplanaires et s'étendent verticalement dans un même plan.

Ainsi, les bandes 14a, 14b, 14c ne se déplacent pas angulairement les unes par rapport aux autres, au cours de l'entraînement de la courroie 14.

Avantageusement, les différentes fonctions sont ici dissociées et assurées respectivement par au moins l'une des bandes 14a, 14b, 14c.

Ainsi, la fonction de la bande principale 14a, dite de traction, est de coopérer avec les roues 16a, 16b dont le mouvement de rotation transmis par ces dernières provoque le déplacement de la bande suivant le parcours sans fin correspondant au parcours de chauffe dans le four.

La bande supérieure 14b remplit une fonction principale distincte de celle d'entraînement de la bande principale 14a, la bande supérieure 14b assure en effet une fonction de support des dispositifs de support 34 des préformes 12 et son déplacement, ainsi que subséquemment celui des dispositifs de support 34, est assuré en reliant la bande supérieure 14b à la bande principale 14a de la courroie 14 qui en assure l'entraînement.

La bande inférieure 14c remplit la même fonction de support que la bande supérieure 14b. La bande inférieure 14c et la bande supérieure 14b permettent de lier les dispositifs de support 34 respectivement à un point haut et à point bas de la courroie 14, afin notamment d'éviter le balancement des dispositifs de support 34.

La bande supérieure 14b comporte une face verticale externe 19b et une face verticale interne 20b d'attache qui est agencée en regard des deux roues 16a, 16b.

La face verticale interne 20b délimite une série de dents 22b qui s'étendent verticalement de haut en bas, de préférence sur toute la largeur de la bande secondaire supérieure 14b.

Avantageusement, la bande supérieure 14b n'est pas réalisée en une seule pièce ou monobloc mais présente une structure ouverte ou susceptible de l'être.

De préférence, la bande supérieure 14b comporte une pluralité de tronçons 18b distincts aptes à être assemblés les uns avec les autres de manière à former une bande supérieure 14b formant une boucle fermée.

Les tronçons 18b sont agencés bout à bout, chaque tronçon 18b étant lié en déplacement individuellement à la bande principale 14a, de façon amovible, par deux moyens de liaison 24 associés.

De même, par symétrie selon le plan horizontal de symétrie, la bande inférieure 14c comporte une face verticale externe 19c et une face verticale interne 20c d'attache qui est agencée en regard des deux roues 16a, 16b.

La face verticale interne 20c délimite une série de dents 22c qui s'étendent verticalement de haut en bas, de préférence sur toute la largeur de la bande secondaire inférieure 14c.

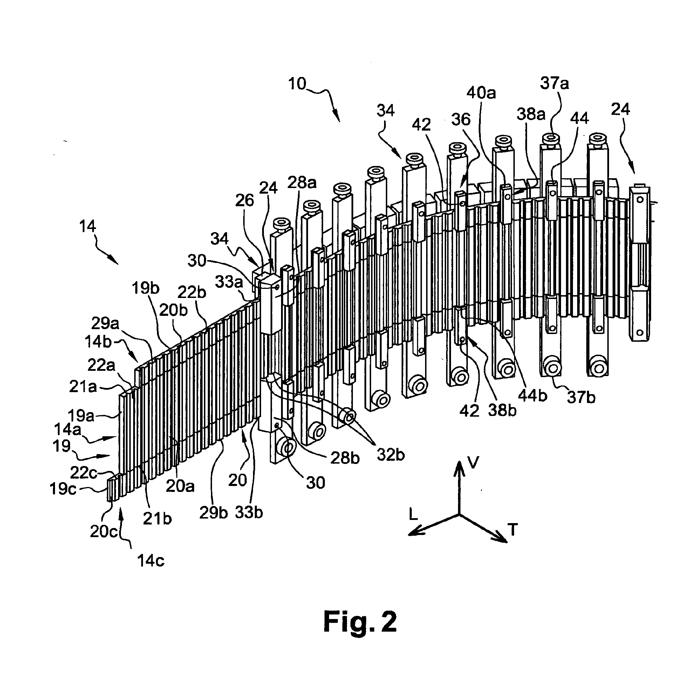

Comme on peut le voir à la figure 2, les dents 22a, 22b, 22c de la bande principale 14a, de la bande supérieure 14b et de la bande inférieure 14c sont alignées verticalement entre elles.

Selon la figure 2, chaque moyen de liaison 24 comporte une bride externe 26 qui s'étend verticalement contre une face externe 19 verticale de la courroie 14, une bride interne supérieure 28a et une bride interne inférieure 28b qui s'étendent verticalement contre une face interne 20 de la courroie 14, en vis à vis de la bride externe 26, de sorte que les brides 26, 28a, 28b font saillies verticalement vers le haut et vers le bas par rapport à la courroie 14.

L'extrémité verticale supérieure de la bride externe 26 est fixée sur la bride interne supérieure 28a, par exemple au moyen d'une vis 30, de sorte que la bande supérieure 14b et une portion de la bande principale 14a sont interposées et pincées entre la bride externe 26 et la bride interne supérieure 28a.

De même, par symétrie selon le plan horizontal de symétrie, l'extrémité verticale inférieure de la bride externe 26 est fixée sur la bride interne inférieure 28b, par exemple au moyen d'une vis 30, de sorte que la bande inférieure 14c et une portion de la bande principale 14a sont interposées et pincées entre la bride externe 26 et la bride interne inférieure 28b.

Avantageusement, la bride interne supérieure 28a délimite un épaulement formant une face horizontale 33a qui est en appui vertical contre le chant supérieur 29a de la bande supérieure 14b, afin de bloquer verticalement la bande supérieure 14b sur la bande principale 14a.

De même, la bride interne inférieure 28b délimite un épaulement formant une face horizontale 33b qui est en appui vertical contre le chant inférieur 29b de la bande inférieure 14c, afin de bloquer verticalement la bande inférieure 14c sur la bande principale 14a.

Enfin, la bride interne supérieure 28a délimite une paire de rainures verticales (non représentées) qui coopèrent à la fois avec une paire de dents 22b complémentaires de la bande supérieure 14b et une paire de dents 22a de la bande principale 14a, afin de favoriser le blocage horizontal de la bande principale 14a sur la bande supérieure 14b, selon le sens d'avancement de la courroie 14.

De même, la bride interne inférieure 28b délimite une paire de rainures 32b verticales qui coopèrent à la fois avec une paire de dents 22c complémentaires de la bande inférieure 14c et une paire de dents 22a de la bande principale 14a, afin de favoriser le blocage horizontal de la bande principale 14a sur la bande inférieure 14c, selon le sens d'avancement de la courroie 14.

Ainsi, la bande principale 14a, la bande supérieure 14b et la bande inférieure 14c sont bloquées en déplacement, immobilisées entre elles verticalement et horizontalement selon le sens d'avancement de la courroie 14.

Selon un autre aspect, chaque dispositif de support 34 des préformes 12 est attaché de façon amovible sur la courroie 14 par un moyen d'attache 36, en regard de la face externe 19 de la courroie 14.

Chaque dispositif de support 34 est apte à prendre une préforme 12 en entrée du four, à la maintenir, à la faire circuler suivant le parcours de chauffe, puis à libérer la préforme 12 pour la transférer en sortie du four.

De plus, chaque dispositif de support 34 comporte une roue supérieure 37a et une roue inférieure 37b dont chacune est destinée à coopérer avec un chemin de guidage, afin de guider le dispositif de support 34 associé selon le parcours de chauffe dans le four.

Selon la figure 2, le moyen d'attache 36 comporte une barrette supérieure 38a qui s'étend verticalement contre la face interne 20b de la bande supérieure 14b de la courroie 14 et qui comporte une extrémité libre supérieure faisant saillie vers le haut par rapport à la bande supérieure 14b.

De façon complémentaire, le dispositif de support 34 associé comporte un plot supérieur 40a qui est agencé en vis à vis de la barrette supérieure 38a et qui est fixé sur l'extrémité supérieure de la barrette supérieure 38a, par exemple par une vis 42, de sorte que la bande supérieure 14b est interposée et pincée entre le dispositif de support 34 et la barrette supérieur 38a.

De plus, la barrette supérieure 38a délimite une encoche 44a verticale qui coopère avec une dent 22b complémentaire de la bande supérieure 14b de la courroie 14 et avec le plot supérieur 40a du dispositif de support 34, afin de favoriser le blocage horizontal de la bande supérieure 14b sur le dispositif de support 34 associé, selon le sens d'avancement de la courroie 14.

Enfin, le plot supérieur 40a du dispositif de support 34 est en appui vertical contre le chant supérieur 29a de la bande supérieure 14b de la courroie 14, afin de bloquer verticalement la bande supérieure 14b et le dispositif de support 34 entre eux.

De même, selon le plan horizontal de symétrie, le moyen d'attache 36 comporte une barrette inférieure 38b qui s'étend verticalement contre la face interne 20c de la bande inférieure 14c de la courroie 14 et qui comporte une extrémité libre inférieure faisant saillie vers le bas par rapport à la bande inférieure 14c.

De façon complémentaire, le dispositif de support 34 associé comporte un plot inférieur (non représenté) qui est agencé en vis à vis de la barrette inférieure 38b et qui est fixé sur l'extrémité inférieure de la barrette inférieure 38b, par exemple par une vis 42, de sorte que la bande inférieure 14c est interposée et pincée entre le dispositif de support 34 et la barrette inférieure 38b.

De plus, la barrette inférieure 38b délimite une encoche 44b verticale qui coopère avec une dent 22c complémentaire de la bande inférieure 14c de la courroie 14 et avec le plot inférieur du dispositif de support 34, afin de favoriser la blocage horizontal de la bande inférieure 14c sur le dispositif de support 34 associé, selon le sens d'avancement de la courroie 14.

Enfin, le plot inférieur du dispositif de support 34 est en appui contre le chant inférieur 29b de la bande inférieure 14c de la courroie 14, afin de bloquer verticalement la bande inférieure 14c et le dispositif de support 34 entre eux.

Complémentairement, selon la figure 1, chaque roue dentée 16a, 16b délimite une pluralité d'encoches 46 verticales dont la forme est complémentaire à la forme des brides internes 28a, 28b et des barrettes 38a, 38b, afin que les roues 16a, 16b n'écrasent pas les brides internes 28a, 28b et les barrettes 38a, 38b lors de l'engrènement de la courroie 14 avec les roues 16a, 16b.

Comme on peut le voir à la figure 1, les dispositifs de support 34 sont attachés par lots sur un couple de bandes constitué d'un tronçon supérieur 18b de la bande supérieure 14b et d'un tronçon inférieur 18c de la bande inférieure 14c associés de la courroie 14, de sorte qu'il est possible de détacher ou d'attacher les dispositifs de support 34 par lot ou groupe de "n" dispositifs de support 34, au moyen des dispositifs de liaison 24 associés.

Cette caractéristique permet notamment de favoriser le montage et le démontage rapide des dispositifs de support 34 sur la courroie 14, avantageusement montés ou démontés par groupe de "n" dispositifs de support 34 solidaires d'au moins un tronçon 18b, 18c de bande secondaire 14b, 14c.

Néanmoins, chaque dispositif de support 34 est apte à être détaché individuellement de la courroie 14 grâce au moyen d'attache 36 associé à chaque dispositif de support 34, notamment pour favoriser les opérations de maintenance ou intervenir sur un dispositif de support 34 donné.

Enfin, les dents 22a, 22b, 22c de la courroie 14 sont alignées entre elles selon une ligne verticale et elles sont avantageusement réparties horizontalement de manière régulière, de sorte que les dents 22a, 22b, 22c constituent un repaire visuel permettant de répartir aisément les dispositifs de support 34 de façon régulière sur la courroie 14.

Avantageusement, la courroie 14 permet de réduire le pas entre deux dispositifs de support 34 consécutifs, c'est-à-dire également entre deux préformes 12 successives.

Bien entendu, l'invention n'est nullement limitée à l'exemple de réalisation préféré qui vient d'être décrit en référence aux figures 1 et 2.

Avantageusement, à longueur équivalente, une courroie 14 présente un poids inférieur à celui d'une chaîne à maillons ce qui en facilite la manipulation lors des interventions sur le dispositif de convoyage 10.

Selon une variante de réalisation, la courroie 14 comporte au moins deux parties distinctes, à savoir une bande principale 14a pour l'entraînement de la courroie 14 et une seule bande secondaire, par exemple supérieure 14b, pour l'accrochage des dispositifs de support 34 des préformes.

En variante, la bande principale 14a ne comporte pas de dents et coopère avec les roues 16a, 16b par friction.

En variante, la bande inférieure 14c et/ou la bande supérieure 14b ne comportent pas de dents.

Par comparaison avec une chaîne à maillons, le nombre de dispositifs de support 34 de préforme 12 n'est plus limité par un entraxe minimum grâce à quoi le pas minimum entre deux préformes 12 consécutives est avantageusement réduit avec une telle courroie 14 selon l'invention.

Dans cette variante, comme dans l'exemple de réalisation décrit et représenté précédemment, la dissociation des fonctions d'entraînement et de support et leur assignation respective à l'une des bandes formant la courroie 14 permet avantageusement d'optimiser le choix de chacune d'elles.

De préférence, la bande principale 14a est une boucle fermée de manière à garantir une résistance à la traction optimale et une fiabilité de fonctionnement.

A contrario, ladite au moins une bande secondaire 14b, 14c de support est avantageusement une boucle ouverte, plus précisément une bande formée de différents tronçons 18b, 18c grâce à quoi il est possible de procéder aisément au montage et démontage d'une groupe de dispositifs de support 34.

En effet, en fonction de la dimension du four, lorsque la courroie 14 formée d'une ou plusieurs bandes atteint une certaine longueur, il est alors parfois difficile de procéder à son démontage rapidement de sorte que les changements des dispositifs de support 34 s'effectuent alors par un démontage individuel, un à un, de chaque dispositif de support 34 ce qui requiert du temps et augmente les coûts.

Avantageusement, lorsque la courroie 14 comporte au moins deux bandes, respectivement une bande principale 14a et une bande secondaire 14b, 14c, seule la bande secondaire 14b, 14c de support doit alors être démontée et sa conception par tronçon 18b permet de procéder rapidement et aisément au montage/démontage de la bande secondaire 14b, 14c.

Grâce à une telle réalisation, on procède pour chaque tronçon 18b démonté de bande secondaire 14b, 14c au démontage simultané d'un nombre n de dispositifs de support 34 que ce tronçon comporte.

Avantageusement, on procède alors également au seul démontage des bandes secondaires 14b, 14c sans qu'il soit nécessaire d'intervenir sur la bande principale 14a de traction assurant la fonction d'entraînement et en prise avec les roues 16a, 16b.

Avantageusement, une telle réalisation d'une bande en tronçons multiples, notamment mais non exclusivement pour la ou les bandes secondaires 14b, 14c de support de la courroie 14, offre une possibilité de réduction importante des coûts dès lors qu'il est possible de standardiser ces éléments pour différents types de four de dimensions différentes.

En effet, les dispositifs de convoyage 10 comportent alors une courroie 14 qui correspond à un nombre déterminé de tronçons assemblés pour former au moins la bande secondaire 14b, 14c de support des dispositifs de support 34 des préformes 12, pour chaque bande d'une longueur donnée correspond un four d'une longueur déterminée également en relation avec le parcours de chauffe des préformes 12.

Avantageusement, lorsque le four est de conception modulaire, il est ainsi possible d'offrir également une modularité similaire pour le dispositif de convoyage 10 et sa courroie 14.

Ainsi qu'on l'aura compris, la courroie 14 selon l'invention est réalisée en au moins deux bandes distinctes, respectivement principale 14a et secondaire 14b, 14c, qui assurent chacune à titre principal une desdites fonctions.

Une telle courroie 14 est susceptible d'être mise en oeuvre dans une unité de chauffage existante en adaptant et en modifiant le dispositif de convoyage 10.

Selon une variante non représentée, le dispositif de convoyage 10 comporte un organe de convoyage obtenu en modifiant partiellement un dispositif de l'état de la technique pour y ajouter au moins une bande 14b, 14c destinée à assurer la fonction de support des dispositifs de support 34 de préformes, tout en conservant une chaîne à maillons pour assurer la fonction d'entraînement, ladite au moins une bande assurant la fonction de support étant liée en déplacement à la chaîne à maillons et formant ensemble l'organe de convoyage.

Dans une telle variante, les risques de pollution associés à la présence de la chaîne et de graisse sont plus réduits qu'auparavant grâce à l'éloignement plus important des dispositifs de support 34 de préformes 12 qui sont avantageusement décalés verticalement.

Avantageusement, les modifications à opérer sur le dispositif de convoyage 10 de l'unité de chauffage sont alors moindres mais, selon une caractéristique importante, l'utilisation d'une courroie, telle qu'une bande secondaire 14b, 14c, pour assurer la fonction de support permet d'obtenir tous les avantages précités.

En effet, on obtient alors un dispositif de convoyage 10 dans lequel les dispositifs de support 34 sont montés solidaires d'au moins une courroie 14b, 14c avantageusement réalisée en différents tronçons assemblés bout à bout de manière à permettre des opérations aisées de montage et de démontage et de surcroît simultanément d'une pluralité de dispositifs de support 34 de préformes 12.

Avantageusement, ladite courroie assurant la fonction de support et formant, avec la chaîne, l'organe de convoyage est réalisée en de multiples tronçons dont la longueur unitaire est déterminée pour permettre une manipulation rapide et facile par un opérateur afin notamment de réduire la durée des interventions et l'arrêt de l'unité de chauffage.

De préférence, la chaîne à maillons est toutefois supprimée et la fonction d'entraînement au sein du dispositif de convoyage 10 également assurée par une courroie, telle que la courroie principale 14a, afin de garantir un environnement plus propre au voisinage des dispositifs de support 34 des préformes 12 grâce à l'absence de graisse.

## Revendications

1. Dispositif de convoyage (10) d'au moins une préforme (12) dans une unité de chauffage de préformes (12), le dispositif de convoyage (10) comportant :
- au moins une courroie (14) de convoyage sans fin qui est entraînée en déplacement,
- au moins deux éléments tournants (16a, 16b) d'entraînement de la courroie (14) de convoyage qui sont chacun montés tournant autour d'un axe (A, B) et qui coopèrent avec la courroie (14) de convoyage pour l'entraîner en déplacement selon un parcours en boucle fermée,
- au moins un dispositif de support (34) d'au moins une préforme (12) qui est lié en déplacement à la courroie (14) de convoyage et qui est destiné à porter la préforme (12), **caractérisé en ce que** la courroie (14) de convoyage comporte au moins :
- une bande principale (14a) de traction qui coopère avec lesdits éléments tournants (16a, 16b), et
- une bande secondaire (14b) de support qui est liée en déplacement à la bande principale (14a) par des moyens de liaison (24), et sur laquelle au moins un dispositif de support (34) est attaché par un moyen d'attache (36).

2. Dispositif de convoyage (10) selon la revendication 1, **caractérisé en ce que** la bande principale (14a) et la bande secondaire (14b) de la courroie (14) s'étendent chacune verticalement dans le sens de leur largeur et **en ce que** la bande secondaire (14b) est agencée au dessus de la bande principale (14a) de sorte que la bande principale (14a) et la bande secondaire (14b) ont le même rayon de courbure autour desdits axes verticaux (A, B), au cours de l'entraînement de la courroie (14).

3. Dispositif de convoyage (10) selon la revendication 2, **caractérisé en ce que** la bande principale (14a) est réalisée en une seule pièce de façon à former une boucle fermée autour desdits axes verticaux (A, B).

4. Dispositif de convoyage (10) selon l'une quelconque des revendications 1 à 3, **caractérisé en ce que** chaque élément tournant (16a, 16b), formant une roue dentée, délimite une série de dents qui coopèrent avec une série de dents (22a) verticales complémentaires de la bande principale (14a) de la courroie (14), afin d'entraîner la courroie (14) en déplacement.

5. Dispositif de convoyage (10) selon la revendication 1, **caractérisé en ce que** le moyen d'attache (36) du dispositif de support (34) de préforme (12) sur la courroie (14) comporte au moins une barrette (38a) verticale qui est fixée sur le dispositif de support (34), de sorte que la bande secondaire (14b) est interposée et pincée entre le dispositif de support (34) et ladite barrette (38a), grâce à quoi le dispositif de support (34) et la bande secondaire (14b) associée sont liés entre eux.

6. Dispositif de convoyage (10) selon la revendication 5, **caractérisé en ce que** la barrette (38a) coopère avec au moins une dent (22b) de la bande secondaire (14b) de façon à bloquer en déplacement la barrette (38a) sur la courroie (14) selon le sens d'avancement de la courroie (14).

7. Dispositif de convoyage (10) selon la revendication 1, **caractérisé en ce que** la bande secondaire (14b) est réalisée en une pluralité de tronçons (18b) qui sont agencés bout à bout et dont chacun est lié en déplacement à la bande principale (14a) par lesdits moyens de liaison (24), et **en ce qu'**une pluralité de dispositifs de support (34) sont attachés sur chaque tronçon (18b) par lesdits moyens d'attache (36).

8. Dispositif de convoyage (10) selon la revendication 1, **caractérisé en ce que** les moyens de liaison (36) de la bande secondaire (14b) sur la bande principale (14a) comportent au moins une première bride (26) et une seconde bride (28a) qui s'étendent verticalement en vis à vis et qui sont liées entre elles, la bande principale (14a) et la bande secondaire (14b) étant interposées et pincées entre les brides (26, 28a) de façon à lier lesdites bandes (14a, 14b) entre elles, et **en ce que** au moins la première bride (26) coopère avec au moins une dent (22b) de la bande secondaire (14b) et une dent (22a) de la bande principale (14a), de façon à bloquer en déplacement lesdites bandes (14a, 14b) entre elles selon le sens d'avancement de la courroie (14).

9. Dispositif de convoyage (10) selon l'une quelconque des revendications précédentes, **caractérisé en ce que** la courroie (14) comporte une bande secondaire (14c) supplémentaire qui présente, selon un plan horizontal de symétrie passant par la bande principale (14a), une symétrie de conception avec la bande secondaire (14b).

## Patentansprüche

1. Fördervorrichtung (10) für mindestens einen Vorformling (12) in einer Einheit zum Erhitzen von Vorformlingen (12), wobei die Fördervorrichtung (10) Folgendes umfasst:
- mindestens ein Endlosförderband (14), das in Bewegung angetrieben wird,
- mindestens zwei sich drehende Elemente (16a, 16b) zum Antrieb der Förderbands (14), die jeweils sich um eine Achse (A, B) drehend montiert sind und die mit dem Förderband (14) zusammenwirken, um dieses in Bewegung in einer geschlossenen Schleifenstrecke anzutreiben,
- mindestens eine Haltevorrichtung (34) für mindestens einen Vorformling (12), die in Bewegung mit dem Förderband (14) verbunden ist und die dazu vorgesehen ist, den Vorformling (12) zu tragen,
**dadurch gekennzeichnet, dass** das Förderband (14) mindestens Folgendes umfasst:
- ein Hauptzugband (14a), das mit den sich drehenden Elementen (16a, 16b) zusammenwirkt, und
- ein Nebenhalteband (14b), das durch Verbindungsmittel (24) in Bewegung mit dem Hauptband (14a) verbunden ist und an dem mindestens eine Haltevorrichtung (34) durch ein Befestigungsmittel (36) befestigt ist.

2. Fördervorrichtung (10) nach Anspruch 1, **dadurch gekennzeichnet, dass** das Hauptband (14a) und das Nebenband (14b) des Bands (14) sich jeweils vertikal gemäß ihrer Breiten erstrecken und dass das Nebenband (14b) derart über dem Hauptband (14a) angeordnet ist, dass das Hauptband (14a) und das Nebenband (14b) während des Antriebs des Bands (14) den gleichen Biegeradius um die vertikalen Achsen (A, B) haben.

3. Fördervorrichtung (10) nach Anspruch 2, **dadurch gekennzeichnet, dass** das Hauptband (14a) aus einem einzigen Stück hergestellt ist, um eine geschlossene Schleife um die vertikalen Achsen (A, B) zu bilden.

4. Fördervorrichtung (10) nach einem der Ansprüche 1 bis 3, **dadurch gekennzeichnet, dass** jedes sich drehende Element (16a, 16b), das ein Zahnrad bildet, eine Reihe von Zähnen abgrenzt, die mit einer Reihe von komplementären vertikalen Zähnen (22a) des Hauptbands (14a) des Bands (14) zusammenwirken, um das Band (14) in Bewegung anzutreiben.

5. Fördervorrichtung (10) nach Anspruch 1, **dadurch gekennzeichnet, dass** das Befestigungsmittel (36) für die Haltevorrichtung (34) für den Vorformling (12) an dem Band (14) mindestens eine vertikale Leiste (38a) umfasst, die derart an der Haltevorrichtung (34) angebracht ist, dass das Nebenband (14b) zwischen der Haltevorrichtung (34) und der Leiste (38a) eingeschoben und eingeklemmt ist, wodurch die Haltevorrichtung (34) und das zugehörige Nebenband (14b) miteinander verbunden sind.

6. Fördervorrichtung (10) nach Anspruch 5, **dadurch gekennzeichnet, dass** die Leiste (38a) mit mindestens einem Zahn (22b) des Nebenbands (14b) zusammenwirkt, um die Leiste (38a) in Bewegung an dem Band (14) in der Vorschubrichtung des Bands (14) zu blockieren.

7. Fördervorrichtung (10) nach Anspruch 1, **dadurch gekennzeichnet, dass** das Nebenband (14b) aus mehreren Abschnitten (18b) hergestellt ist, die aneinander angeordnet sind und die jeweils in Bewegung durch die Verbindungsmittel (24) mit dem Hauptband (14a) verbunden sind, und dass mehrere Haltevorrichtungen (34) durch die Befestigungsmittel (36) an jedem Abschnitt (18b) befestigt sind.

8. Fördervorrichtung (10) nach Anspruch 1, **dadurch gekennzeichnet, dass** die Verbindungsmittel (36) für das Nebenband (14b) an dem Hauptband (14a) mindestens einen ersten Bügel (26) und einen zweiten Bügel (28a) umfassen, die sich vertikal einander gegenüberliegend erstrecken und die miteinander verbunden sind, wobei das Hauptband (14a) und das Nebenband (14b) zwischen den Bügeln (26, 28a) eingeschoben und eingeklemmt sind, um die Bänder (14a, 14b) miteinander zu verbinden, und dass mindestens der erste Bügel (26) mit mindestens einem Zahn (22b) des Nebenbands (14b) und einem Zahn (22a) des Hauptbands (14a) zusammenwirkt, um die Bänder (14a, 14b) in Bewegung miteinander in der Vorschubrichtung des Bands (14) zu blockieren.

9. Fördervorrichtung (10) nach einem der vorhergehenden Ansprüche, **dadurch gekennzeichnet, dass** das Band (14) ein zusätzliches Nebenband (14c) umfasst, das in einer horizontalen Symmetrieebene, die durch das Hauptband (14a) verläuft, eine Konstruktionssymmetrie mit dem Nebenband (14b) aufweist.

## Claims

1. A device (10) for conveying at least one preform (12) in a unit for heating preforms (12), the conveyor device (10) including:
- at least one endless conveyor belt (14) that is driven in movement,
- at least two rotary elements (16a, 16b) for driving the conveyor belt (14) each of which is mounted to turn about an axis (A, B) and which cooperate with the conveyor belt (14) to drive it in movement in a closed loop path,
- at least one support device (34) for at least one preform (12) that is connected to the conveyor belt (14) to move therewith and that is adapted to carry the preform (12),
**characterized in that** the conveyor belt (14) includes at least:
- a main traction band (14a) that cooperates with said rotary elements (16a, 16b), and
- a secondary support band (14b) that is connected to the main band (14a) to move with it by connecting means (24) and to which at least one support device (34) is attached by attachment means (36).

2. The conveyor device (10) as claimed in claim 1, **characterized in that** the widths of the main band (14a) and the secondary band (14b) of the belt (14) each extend vertically and **in that** the secondary band (14b) is arranged above the main band (14a) so that the main band (14a) and the secondary band (14b) have the same radius of curvature around said vertical axes (A, B) during driving of the belt (14).

3. The conveyor device (10) as claimed in claim 2, **characterized in that** the main band (14a) is produced in one piece in such a manner as to form a closed loop around said vertical axes (A, B).

4. The conveyor device (10) as claimed in any one of claims 1 to 3, **characterized in that** each rotary element (16a, 16b), forming a toothed wheel, delimits a series of teeth that cooperate with a series of complementary vertical teeth (22a) of the main band (14a) of the belt (14) in order to drive movement of the belt (14).

5. The conveyor device (10) as claimed in claim 1, **characterized in that** the means (36) for attaching the support device (34) for preforms (12) to the belt (14) include at least one vertical strip (38a) that is fixed to the support device (34) with the result that the secondary band (14b) is disposed and clamped between the support device (34) and said strip (38a), thanks to which the support device (34) and the associated secondary band (14b) are connected to each other.

6. The conveyor device (10) as claimed in claim 5, **characterized in that** the strip (38a) cooperates with at least one tooth (22b) of the secondary band (14b) in such manner as to immobilize the strip (38a) on the belt (14) in the direction of forward movement of the belt (14).

7. The conveyor device (10) as claimed in claim 1, **characterized in that** the secondary band (14b) is produced in a plurality of sections (18b) that are arranged end-to-end and each of which is connected to the main band (14a) to move therewith by said connecting means (24), and **in that** a plurality of support devices (34) are attached to each section (18b) by said attachment means (36).

8. The conveyor device (10) as claimed in claim 1, **characterized in that** the means (36) for connecting the secondary band (14b) to the main band (14a) include at least one first clamp (26) and one second clamp (28a) that extend vertically face-to-face and are connected to each other, the main band (14a) and the secondary band (14b) being disposed and clamped between the clamps (26, 28a) in such manner as to connect said bands (14a, 14b) to each other, and **in that** at least the first clamp (26) cooperates with at least one tooth (22b) of the secondary band (14b) and one tooth (22a) of the main band (14a) in such manner as to immobilize said bands (14a, 14b) relative to each other in the direction of forward movement of the belt (14).

9. The conveyor device (10) as claimed in any one of the preceding claims, **characterized in that** the belt (14) includes an additional secondary band (14c) that is of symmetrical design to the secondary band (14b) in a horizontal plane of symmetry passing through the main band (14a).
